# EUROPEAN PATENT APPLICATION

(11) **EP 4 105 691 A1**
(43) Date of publication of application: **21.12.2022**
(21) Application number: 21305821.7
(22) Date of filing: 16.06.2021
(51) Int. Cl.: G01T 1/20, G01T 3/06

(54) **GAMMA AND NEUTRON RADIATION DETECTOR**

(71) Applicant: Soletanche Freyssinet, 92500 Rueil Malmaison (FR)
(72) Inventor: GRÍSA, Tomá, 60200 BRNO (CZ); SARO, Matu, 03481 LISKOVÁ (SK)
(74) Representative: Nony

(57) **Abstract**

A radiation detection structure (2) for the selective detection of neutron (N) and gamma radiation (R), comprising:
∘ a neutron scintillator medium (25),
∘ a gamma scintillator medium (20),
∘ at least one neutron-channel light guide (45), which optical properties are selected as to output photons representative of the intensity of the scintillation (L2) produced within the neutron scintillator medium (25),
∘ at least one gamma-channel light guide (40), which optical properties are selected as to output photons representative of the intensity of the scintillation (L1) produced within the gamma scintillator medium (20),
the at least one neutron-channel and at least one gamma-channel light guides (40;45) each being exposed to scintillation light (L1; L2) produced by both the neutron and gamma scintillator media (20; 25).

## Description

### Field of the invention

The present invention relates to active radiation detectors, in particular detectors capable to selectively detect gamma and neutron radiation.

### Background of the invention

Scintillation detectors use the molecular or atomic excitation effect of an incident radiation passing through a scintillating material to detect and/or measure said radiation. The scintillating material, also called "scintillator", generates photons in response to the incident radiation which can be detected by a photodetector to estimate the energy deposited in the scintillation detector by the radiation.

It is useful to be able to both detect and identify qualitatively or quantitatively the nature of a radiation. There are, however, many different types of radiation which sometimes need to be detected simultaneously.

For instance, to monitor the level of radioactivity inside a person or an object for security or other purposes, it can be necessary to detect and differentiate neutrons from gamma radiation emitted at the same time (from a single or multiple sources).

The selective detection of neutrons in the presence of a large flux of gamma rays has always been difficult. In general, gamma detectors make poor neutron detectors and good neutron detectors tend to be poor gamma detectors.

It is known to use several detectors for the selective and simultaneous detection of different types of radiation, for instance two detectors with one for neutrons and the other for X or gamma photons. But this is relatively costly and difficult to implement.

Another known approach consists in using one detector comprising two or more scintillators coupled with one photomultiplier, each scintillator being more sensitive to a certain nature of radiation, such as in US 7,335,891. The different scintillations are then collected by the photomultiplier generating in return a signal, which must be processed with relatively complex methods to allow for the discrimination.

An example of such methods is the "pulse shape discrimination", a technique widely used in the field.

However, the detectors using pulse shaping discrimination can, generally, not be manufactured as high-volume detectors, for instance comprising plastic scintillation larger than 2" x 2", because the pulse shape information is lost due to light propagation within the detector.

There are other known methods attempting to separate the signals coming from the different scintillations.

EP 0606176 discloses a detector comprising a first scintillator sensitive to the neutrons and a second scintillator sensitive to the X or gamma photons, coupled with a photomultiplier. The detector comprises an attenuating light guide for guiding the photons produced by the first scintillator to the photomultiplier which facilitates the separation of the energy bands associated with each of the first scintillator, the second scintillator and the background noise of the photomultiplier.

US 7,525,101 describes a detector for selective radiation detection comprising a first light guide, optically coupled to a first optical detector; a second light guide, optically coupled to a second optical detector and a sheet of neutron scintillator, opaque for incoming optical photons, placed between the first and the second light guides. The second light guide comprises a gamma ray scintillator material.

WO2013122763 discloses a detector comprising a plurality of wavelength shifting fibers (WLS) guiding the light emitted by scintillators to one or more photodetectors, with a temporal integration of the photo-detector signal.

These systems, however, show a relatively low compacity and are not easily deployable.

Thus, there remains a need for an improved radiation detector capable of selectively detecting neutron and gamma radiation without using extensive signal processing methods such as pulse shape discrimination. There is also an interest in providing a detector that is compact, reliable and easily transportable.

### Summary

The present invention aims to remedy to all or part of the deficiencies of the prior art mentioned above and exemplary embodiments of the invention relate to a radiation detection structure for the selective detection of neutron and gamma radiation, comprising:
o a neutron scintillator medium,
o a gamma scintillator medium,
o at least one neutron-channel light guide, which optical properties are selected as to output photons representative of the intensity of the scintillation produced within the neutron scintillator medium,
∘ at least one gamma-channel light guide, which optical properties are selected as to output photons representative of the intensity of the scintillation produced within the gamma scintillator medium,
the at least one neutron-channel and at least one gamma-channel light guides each being exposed to scintillation light produced by both the neutron and gamma scintillator media.

With such a radiation detection structure, the discrimination between neutrons and gamma radiation occurs within the structure, at the level of the light guides, which are chosen as to selectively output light depending on the nature of the radiation that has been detected by one or the other scintillator.

The photons guided out by the neutron- and gamma-channel light guides can be collected separately, for instance by two different channels of a photomultiplier, and hence, processed as two distinct signals which allows for a less costly and more robust pulse-processing method compared to traditional methods such as pulse shape discrimination.

### Light guides

Preferentially, the at least one neutron-channel and at least one gamma-channel light guides are at least partially embedded within the gamma scintillator medium.

The resulting detection structure is thus compact and easily transportable, and the discrimination is volume independent.

The light guides could also be placed somewhere else, such as the interface between the gamma and neutron scintillators. Preferentially, the neutron-channel light guide is arranged at the interface between the scintillator media.

The position of the gamma-channel light guide can be chosen as to optimize the efficiency in scintillation light collection from gamma scintillator medium and is for instance fully embedded within the gamma scintillator medium.

Preferentially, at least one of the at least one neutron-channel and at least one gamma-channel light guides comprise at least one optical fiber.

The first and second light guides can be of various types. Both guides display optical properties that allows for a selection of the desired light, meaning only the light having a pre-selected wavelength or a wavelength in a pre-selected range of the wavelengths is guided through the optical system. The light can be selectively absorbed by choosing the appropriate material for the light guide.

Preferentially, the at least one neutron-channel light guide absorbs scintillation in a first range of wavelengths and the at least one gamma-channel light guide absorbs scintillation in a second range of wavelengths different from the first range of wavelengths. Said ranges of wavelengths may be selected as to clearly separate the scintillations emitted by the two scintillators. An absorption peak of the neutron channel light guide falls within the first range. An absorption peak of the gamma channel light guide falls within the second range.

These ranges overlap at least partially the respective ranges of emission of the scintillators, and preferably the range of emission of each scintillator is wholly included in the respective range of absorption of the respective light guide.

The first range may correspond to absorption of blue light and the second range to the absorption of UV light.

Preferentially, at least one of the at least one neutron-channel and at least one gamma-channel light guides comprise at least one wavelength-shifting material (WLS).

Even better, the at least one neutron-channel and at least one gamma-channel light guides both comprise at least one wavelength-shifting material (WLS).

In the latter case, the at least one WLS material of the neutron-channel light guide and the at least one WLS material of the gamma-channel light guide may shift the absorbed scintillations towards two different ranges of wavelengths.

For instance, a light guide shifts an absorbed scintillation from the blue to yellow light, and the other light guide shifts an absorbed scintillation from UV to blue light.

In a variant, the at least one WLS material of the neutron-channel light guide and the at least one WLS material of the gamma-channel light guide shift the absorbed scintillations towards a substantially same range of wavelengths.

The WLS material of the first and/or second light guide may be a WLS fiber, preferentially chosen among Y11 fiber, B3 fiber, or any other suitable WLS fiber, for example manufactured by the company Kuraray.

As a variant, the light guides comprise a filter, or a colored core.

### Arrangement of the scintillator media with one another

The neutron and gamma scintillator media can be arranged in different ways.

Preferentially, the neutron and gamma scintillator media are superposed in a such a way that the photons produced by the neutron scintillator medium travel through the gamma scintillator medium after being produced.

The neutron and gamma scintillator media may thus be arranged each in a planar configuration, for example as two superposed layers.

As a variant, the neutron and gamma scintillator media may be of cylindrical or annular shape and arranged in a coaxial configuration with, for instance, the neutron scintillator on the outside of the detection structure.

### Gamma scintillator medium

Preferentially, the gamma scintillator medium presents at least one surface exposed to incoming radiation. Said surface may be of any suitable size, depending on the application. The size may be chosen as a tradeoff between the desired detection efficiency, which is proportional to the detection area, and the desired compacity for the detector.

Preferably, the size of the surface of the gamma scintillator expose to incoming radiation is at least 25 cm², better at least 100 cm², even better at least 300 cm².

The gamma scintillator medium may have a thickness, in a direction substantially orthogonal to said surface, that may be of the order of 50 mm +/- 10mm. In a variant, the thickness may be of the order of 100 mm +/- 10mm.

The choice of the thickness is directly related to the sensitivity of the scintillator to gamma radiation. A scintillator with a low thickness may not be as performant to detect gamma radiation.

The gamma scintillator medium may be of various composition.

The gamma scintillator medium is preferably a plastic scintillator, which can be manufactured as relatively high-volume detector.

It may comprise an organic scintillating material enriched with crystalline compounds, for instance with p-terphenyl.

The gamma scintillator medium may produce a scintillation of wavelength in the range of 300-430 nm.

### Neutron scintillator medium

The neutron scintillator medium may define a layer continuously covering at least one face of the gamma scintillator medium.

Preferably, the thickness of the neutron scintillator medium is not greater than 0.5 mm. The basis weight of the neutron scintillator medium is preferentially about 110 +- 10 mg/cm².

The neutron scintillator medium may be of various composition.

The neutron scintillator medium may comprise an inorganic scintillating material, preferentially a glass, preferentially an enriched lithium-based glass comprising crystals of silver activated zinc-sulfide (ZnS(Ag)).

The neutron scintillator medium may be used in the form of powder, such as a powder comprising ⁶LiF/ZnS(Ag), which directly applied as a coating on the gamma scintillator medium.

Preferentially, the neutron scintillator medium comprises a scintillating material inducing a (n, α) reaction when interacting with neutrons. Such a reaction results in an energy deposit inside the neutron scintillator medium and the emission of the associated scintillation.

The neutron scintillator medium may produce a scintillation of wavelength in the range of 350-650 nm, preferably in the range 400-450 nm, which corresponds for example to the emission spectra of ZnS.

Preferentially, the maximum of the emission spectra of the neutron scintillator medium is around 425 nm.

### Moderating material

The detection structure may further comprise a moderating material to slow down the incoming fast neutrons before their interaction with the neutron scintillator medium, the moderating material preferentially being the gamma scintillator medium.

As a variant, the moderating material may be added as a supplementary layer in the detection structure, for instance with a polyethylene layer of thickness about 30 mm.

### Radiation detector

Other exemplary embodiments of the present invention relate to a radiation detector comprising:
∘ A detection structure as defined above,
∘ A dual-channel detector coupled to the detection structure so that the channels respectively receive the photons outputted by the neutron-channel light guide and the gamma-channel light guide, and configured to:
   - count, in each channel, the number of output photons transmitted by the guide light to which the channel is coupled, and,
   - generate for each channel, a signal representative of the number of photons counted.

### Brief description of the figures

For a more complete understanding of the present invention, a description will now be given of several examples, taken in conjunction with the accompanying drawings, in which:
Fig.1 illustrates, in a schematic and simplified manner, a radiation detector in accordance with embodiments of the present invention in cross-sectional view,
Fig.2 is a graph illustrating the emission or absorption spectra of various elements of a detection structure according to the invention,
Fig.3 shows, in perspective, an example of radiation detection structure according to the invention,
Fig.4a, Fig.4b et Fig.4c represent schematically the front, back and lateral faces of the detection structure of Fig.3, respectively,
Fig.5 shows an example of readout electronics of a radiation detector according to the invention,

### Detailed description

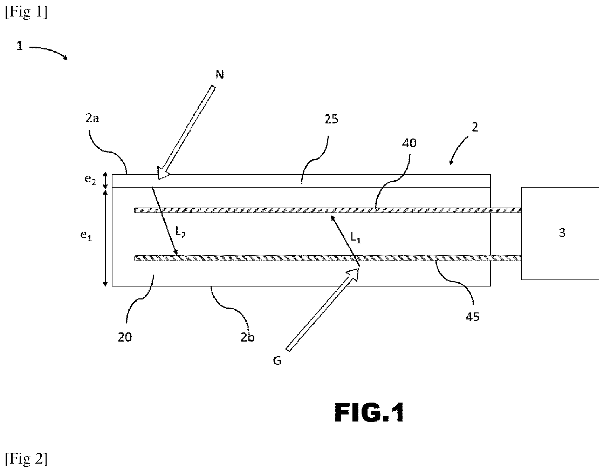

Figure 1 depicts an embodiment of a radiation detector 1 configured to selectively detect neutrons N and gamma rays G.

The radiation detector comprises a radiation detector structure 2 and a dual-channel detector 3.

In the example illustrated in Figure 1, gamma rays G and neutrons N are represented as entering the detector along two different directions and on opposite faces of the detector structure 2, but they may enter through the same face.

This choice was made for the clarity of the drawing only and should not be seen as a limitation of the present invention: the detector 1 as represented in figure 1 may be exposed, simultaneously or not, to both gamma and neutrons radiation on either of its faces.

The detector structure 2 shows a layered planar configuration, but other non-planar geometries are possible.

It comprises a gamma scintillator medium 20 of thickness *e1,* and a neutron scintillator medium 25 continuously covering the top face of the gamma scintillator medium 20 as a thinner layer of thickness *e2*.

The thickness e1 is for instance of the order of 50mm. The thickness e2 is for instance of the order of 0.5 mm.

In the following, for concision purposes, the radiation detector structure 2 is simply denoted as "detector structure" and scintillator media as "scintillators".

The detector structure 2 further comprises two light guides 40 and 45, for example fully embedded within the gamma scintillator 20. In other examples, the light guides are arranged someplace else, for instance at the interface between the gamma and neutron scintillators.

The light guide 40 is for example a "gamma-channel" light guide, which means that its optical properties are selected as to output photons representative of the intensity of the scintillation L1 produced within the gamma scintillator 25. The light guide 45 is then a "neutron-channel" light guide, chosen as to output photons representative of the intensity of the scintillation L2 produced within the neutron scintillator 25.

In the example illustrated in figure 1, the neutron scintillation L2 travels through the gammascintillator before entering the light guide 45.

The photons guided by the light guides 40 and 45 are transmitted to the dual channel detector 3, each channel receiving the photons of a particular light guide.

Hence, the signal issued from the detection of gamma radiation, also denoted as "gamma signal" in the following, and the one issued from the detection of neutrons, also denoted as "neutron signal" in the following, may travel along physically separated path, which substantially simplifies the post-processing of the detection.

Different types of light guides can be used to achieve the scintillator-based light selection.

For instance, one can use light guides selectively absorbing the scintillation produced by one or the other scintillator, i.e., in the example considered, the light guide 45 absorbs the scintillation L2 produced by the neutron scintillator 25, and the light guide 40 absorbs the scintillation L1 produced by the gamma scintillator 20,

To do so, such light guides may display an absorption spectrum that is substantially complementary to the emission spectrum of the scintillator it should absorb the light from.

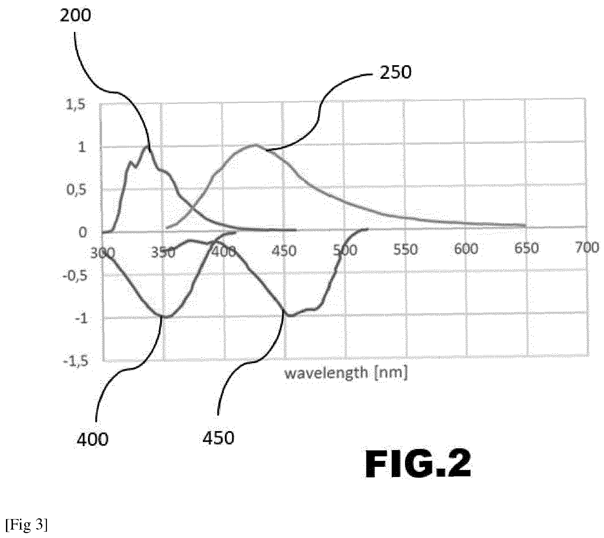

The gamma and neutrons scintillators 20 and 25 exhibit non-identical emission spectra as shown in Figure 2.

In the example illustrated in this Figure 2, the emission spectrum S20 of the gamma scintillator 20 covers wavelengths in an approximate range of 300-430 nm, with a maximum around 335 nm

The emission spectrum S25 of the neutron scintillator 25 covers wavelengths in an approximate range of 350-650 nm, with a maximum around 425 nm.

The light guides 40 and 45 exhibit absorption spectra S40 and S45 that correspond approximately to the emission spectrum S20 and S25, respectively.

The light guides 40 and 45 may be WLS fibers shifting their respective absorbed light toward two different ranges of wavelengths.

The light guide 40 shifts for example the absorbed scintillation light L1 (produced by the gamma scintillator) toward a range corresponding to blue light, while the light guide 45 shift the absorbed scintillation light L2 toward a range corresponding to yellow light.

The wavelength shifting allows to better discriminate the gamma signal from the neutrons signal, the channels of the dual-channel detector being configured to detect only some selected ranges of wavelengths.

In some cases, the incoming neutrons N can be moderated inside the gamma scintillator 20.

The detection structure 2 may comprise gamma and neutron scintillators 20 and 25 of various types.

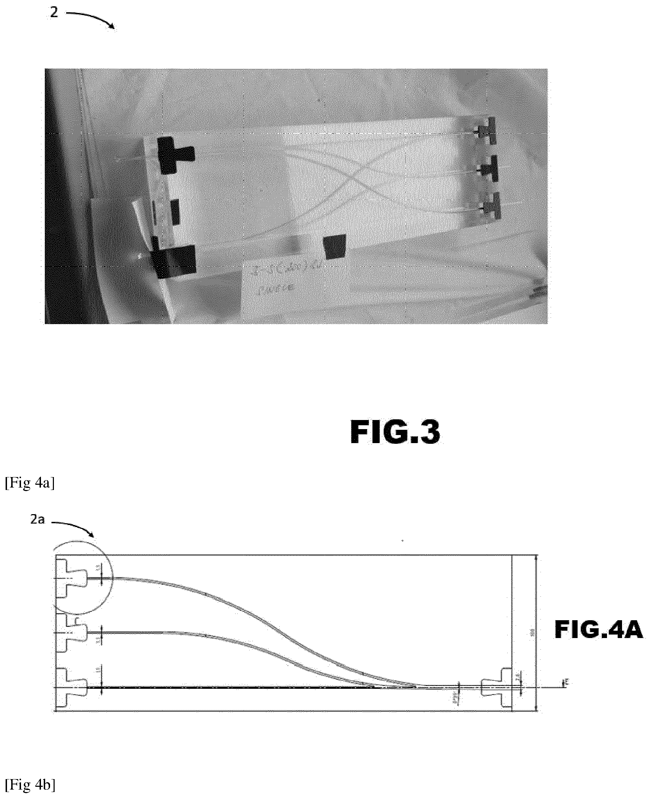

An example of a detection structure 2 of dimensions 300 x 100 x 50 mm is illustrated in Figure 3.

The gamma scintillator 20 is a plastic scintillator enriched with p-terphenyl.

The gamma channel light guide 40 comprises three commercially available B3-type WLS fibers of diameter about 1 mm arranged on the front face 2a of the detection structure 2 converging to a single outlet 41 on the lateral face 2c, as can be seen on Figure 4a.

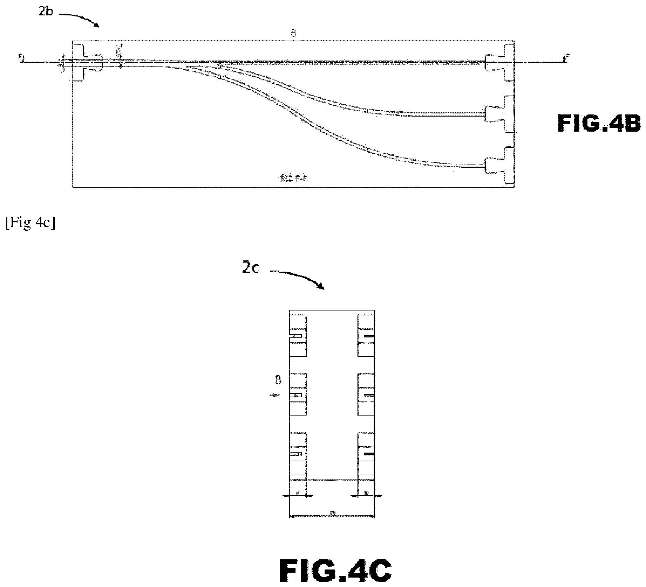

The neutron channel light guide 45 comprises three commercially available Y11-type WLS fibers of diameter about 2 mm arranged on the back face 2b of the detection structure 2, as can be seen on Figure 4b, converging to a single outlet 46 on the same lateral face 2c of the light guide 40.

The three inlets 42 (respectively 47) of the light guides 40 (respectively 45) are arranged on the opposite lateral face 2d, as can be seen on Figure 4c.

The neutron scintillator 25 (not represented) is a ⁶LiF/ZnS(Ag) conversion/scintillation layer applied as a powder coating on top of one face of the gamma scintillator 20.

Such a detection structure 2 can be obtained by first milling grooves directly into the volume of plastic gamma scintillator 20. A material with the desired optical properties, for instance PDMS elastomers or resins, is then poured into the grooves to obtain the WLS. The neutron conversion layer is then coated on top of the structure.

The detection structure 2 may operate as follows.

Incoming neutrons N may be moderated inside the gamma scintillator 20 before interacting with the neutron scintillator 25. The interaction of the neutrons N with the neutron scintillator 25 yields a conversion reaction Li(n,α) resulting in an energy deposit inside the ZnS molecules of the neutron scintillator 25 and a consequent emission of the scintillation L2. L2 is for example a blue light.

The scintillation L2 then travels through the plastic gamma scintillator 20, as described above, before being selectively collected by the neutron-channel light guide 45.

Incident gamma radiation may interact with the gamma scintillator 20 by depositing energy via Compton scattering, mostly, which results in the emission of the scintillation L1. L1 may be UV light.

The scintillation L1 then travels through the plastic gamma scintillator 20 before being selectively collected by the gamma-channel light guide 40.

A dual channel detector 3 can be connected to the detection structure 2 described above to process the scintillations collected.

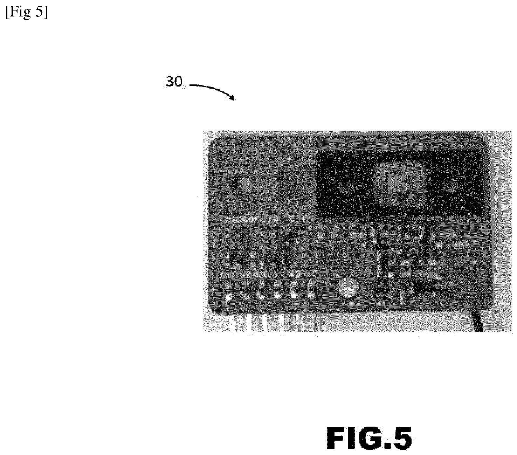

The detector 3 may comprise two electronic boards 30 as shown in Figure 5.

The board 30 may comprises a single-channel silicon photomultiplier (SiPM) chip, for example of dimensions 3x3mm, configured to count the number of output photons transmitted by the guide light 40 or 45 to which the channel is coupled. It then generates a signal representative of the number of photons counted.

The invention is not limited to the disclosed embodiments. For example, the scintillators may present a non-planar configuration.

The optical lightguides may be planar lightguides presenting similar absorption and emission properties as the optical fibers described above.

The detector may comprise additional refractive or reflective elements helping direct or concentrate the light towards regions of interest, for instance with an aluminum foil wrapped around the scintillators, or a reflective powder coated at least partially on the outside of detection structure 2.

## Claims

1. A radiation detection structure (2) for the selective detection of neutron (N) and gamma radiation (R), comprising:
∘ a neutron scintillator medium (25),
∘ a gamma scintillator medium (20),
∘ at least one neutron-channel light guide (45), which optical properties are selected as to output photons representative of the intensity of the scintillation (L2) produced within the neutron scintillator medium (25),
∘ at least one gamma-channel light guide (40), which optical properties are selected as to output photons representative of the intensity of the scintillation (L1) produced within the gamma scintillator medium (20),
the at least one neutron-channel and at least one gamma-channel light guides (40;45) each being exposed to scintillation light (L1; L2) produced by both the neutron and gamma scintillator media (20; 25).

2. Detection structure according to claim 1, the at least one neutron-channel and at least one gamma-channel light guides (40; 45) being at least partially embedded within the gamma scintillator medium (20).

3. Detection structure according to one of claims 1 and 2, at least one of the at least one neutron-channel and at least one gamma-channel light guides comprising at least one wavelength-shifting material (WLS), and preferentially, the at least one neutron-channel and at least one gamma-channel light guides both comprising at least one wavelength-shifting material (WLS).

4. Detection structure according to the claim 3, the at least one wavelength-shifting material being a WLS fiber.

5. Detection structure according to any of the preceding claims, at least one of the at least one neutron-channel and at least one gamma-channel light guides (40 ;45) comprising at least one optical fiber.

6. Detection structure according to any of the preceding claims, the at least one neutron-channel light guide (45) absorbing scintillation (L2) in a first range of wavelengths and the at least one gamma-channel light guide (40) absorbing scintillation (L1) in a second range of wavelengths different from the first range of wavelengths.

7. Detection structure according to the preceding claim, the first range corresponding to absorption of blue light and the second range of wavelengths corresponding to absorption of UV light.

8. Detection structure according to any of the preceding claims, the neutron and gamma scintillator media (20 ; 25) being superposed in a such a way that the photons produced by the neutron scintillator medium (L2) travel through the gamma scintillator medium (20) after being produced.

9. Detection structure according to any of the preceding claims, the gamma scintillator medium (20) presenting at least one surface (2b) exposed to incoming radiation, the size of the surface being at least 25 cm², better at least 100 cm², better at least 300 cm².

10. Detection structure according to the preceding claim, wherein the gamma scintillator medium (20) has a thickness (e1) in a direction substantially orthogonal to said area, said thickness preferably being of the order of 50 mm +/- 10mm.

11. Detection structure according to any of the preceding claims, the neutron scintillator medium (25) defining a layer continuously covering at least one face of the gamma scintillator medium.

12. Detection structure according to any of the preceding claims, the neutron scintillator medium (25) comprising an inorganic scintillating material, preferentially a glass, preferentially an enriched lithium-based glass comprising crystals of silver activated zinc-sulfide (ZnS(Ag)).

13. Detection structure according to any of the preceding claims, the neutron scintillator medium (25) comprising a scintillating material inducing a (n, α) reaction when interacting with neutrons.

14. Detection structure according to any of the preceding claims, the gamma scintillator medium (25) comprising an organic scintillating material enriched with crystalline compounds.

15. Detection structure according to any of the preceding claims, wherein the neutron scintillator medium (25) produces a scintillation (L2) of wavelength in the range of 350-650 nm, preferably in the range 400-450 nm.

16. Detection structure according to any of the preceding claims, wherein the gamma scintillator medium (20) produces a scintillation (L1) of wavelength in the range of 300-430 nm.

17. Detection structure according to any of the preceding claims, further comprising a moderating material to slow down the incoming neutrons (N) before their interaction with the neutron scintillator medium, the moderating material preferentially being the gamma scintillator medium (20).

18. A radiation detector (1) comprising:
∘ A detection structure (2) as defined in any of the preceding claims,
∘ A dual-channel detector (3) coupled to the detection structure (2) so that the channels respectively receive the photons outputted by the neutron-channel light guide and the gamma-channel light guide, and configured to:
- count, in each channel, the number of output photons transmitted by the guide light to which the channel is coupled, and,
- generate for each channel, a signal representative of the number of photons counted.
